# EUROPEAN PATENT APPLICATION

(11) **EP 2 495 626 A1**
(43) Date of publication of application: **05.09.2012**
(21) Application number: 12157813.2
(22) Date of filing: 01.03.2012
(51) Int. Cl.: G05B 19/4062, G05B 19/409

(54) **Method of controlling the electric drive of an automatic manufacturing machine, and automatic manufacturing machine with electric drive control**

(30) Priority: 01.03.2011 IT BO20110095
(71) Applicant: G.D Societa' per Azioni, Bologna (IT)
(72) Inventor: Spirito, Gilberto, 40133 Bologna (IT); Spisni, Franco, 40063 Monghidoro (IT); Squarzoni, Michele, 44100 Ferrara (IT)
(74) Representative: Jorio, Paolo

(57) **Abstract**

A method of controlling the electric drive of an automatic manufacturing machine includes the steps of determining the position of a manual control (9) operated manually by an operator; controlling, as a function of the position of the manual control (9), at least one electric machine motor (4) which drives at least part of a conveying device (25) of the automatic machine (1) to move the conveying device (25); determining a drive torque generated by the electric machine motor (4); and applying to the manual control (9) a resisting torque, which opposes movement of the manual control (9) and is a function of the drive torque generated by the electric machine motor (4).

## Description

### TECHNICAL FIELD

The present invention relates to a method of controlling the electric drive of an automatic manufacturing machine, and to an automatic manufacturing machine with electric drive control.

The present invention may be used to advantage on an automatic cigarette packing machine, to which the following description refers purely by way of example.

### BACKGROUND ART

Automatic cigarette packing machines normally comprise a number of conveyors for conveying the cigarettes along a packing path, and which are powered by a main electric motor. The packing path, which is equipped with numerous moving parts, is protected along its whole length by safety guards to prevent workers from accidentally coming into contact with the moving parts. For obvious safety reasons, the main electric motor is only powered to operate the system when the guards are closed, i.e. preventing access to the packing path from the outside.

For effective adjustment and maintenance of the machine (e.g. to improve packing quality or clear blockages), a handwheel is connectable mechanically - when the main electric motor is off - to the mechanical transmission of the main electric motor with a transmission ratio enabling low-speed manual operation of the actuators along the packing path.

As opposed to a single main electric motor driving all the conveyors via a mechanical transmission, modern cigarette packing machines feature a number of mechanically independent electric motors, each for driving a respective conveyor, and which is synchronized with all the other motors using a master-slave control technique (i.e. one 'master' electric motor dictates a reference angular position with which all the other 'slave' electric motors must conform).

When working with a number of mechanically independent electric motors, the conveyors along the packing path cannot be operated manually at low speed using one handwheel connected mechanically to the mechanical transmission of the machine. It has therefore been proposed to disconnect the handwheel mechanically from the mechanical transmission of the machine: in this solution, the handwheel simply rotates an angular position sensor (typically an encoder), which reads the angular position of the handwheel, and all the electric motors are run and synchronized with the angular position of the handwheel.

One example of an automatic cigarette packing machine, in which the handwheel is disconnected mechanically from the mechanical transmission and simply rotates an angular position sensor, is described in Patent Application WO2009046788A1.

Using a handwheel with no direct mechanical connection to the mechanical transmission of the machine, however, the operator may sometimes force the conveyors to move even in the presence of 'obstacles' (typically a holdup of processed products or, more rarely, a mechanical obstacle, such as a badly assembled component part of a foreign body left inside the machine). Software protection is obviously provided to prevent the electric motors from straining against obstacles and from operating even if the operator continues turning the handwheel. Though posing no risk to the integrity of the machine, such a situation is unpopular with operators, who simply see the machine failing to respond to their commands, without understanding (at least immediately) why.

### DESCRIPTION OF THE INVENTION

It is an object of the present invention to provide a method of controlling the electric drive of an automatic manufacturing machine, and an automatic manufacturing machine with electric drive control, which are designed to eliminate the above drawbacks and are cheap and easy to implement.

According to the present invention, there are provided a method of controlling the electric drive of an automatic manufacturing machine, and an automatic manufacturing machine with electric drive control, as claimed in the accompanying Claims.

### BRIEF DESCRIPTION OF THE DRAWINGS

A number of non-limiting embodiments of the present invention will be described by way of example with reference to the accompanying drawings, in which:
Figure 1 shows a schematic view in perspective, with parts removed for clarity, of an automatic machine for wrapping packets of cigarettes in transparent plastic overwrap, and implementing the control method according to the present invention;
Figure 2 shows a schematic front view, with parts removed for clarity, of the Figure 1 machine;
Figure 3 shows a schematic side view, with parts removed for clarity, of the Figure 1 machine;
Figure 4 shows a block diagram of a control unit of the Figure 1 machine;
Figure 5 shows a schematic view in perspective, with parts removed for clarity, of an automatic machine for producing rigid packets of cigarettes, and implementing the control method according to the present invention;
Figure 6 shows a schematic front view, with parts removed for clarity, of an automatic machine for producing cigarette filters, and implementing the control method according to the present invention.

### PREFERRED EMBODIMENTS OF THE INVENTION

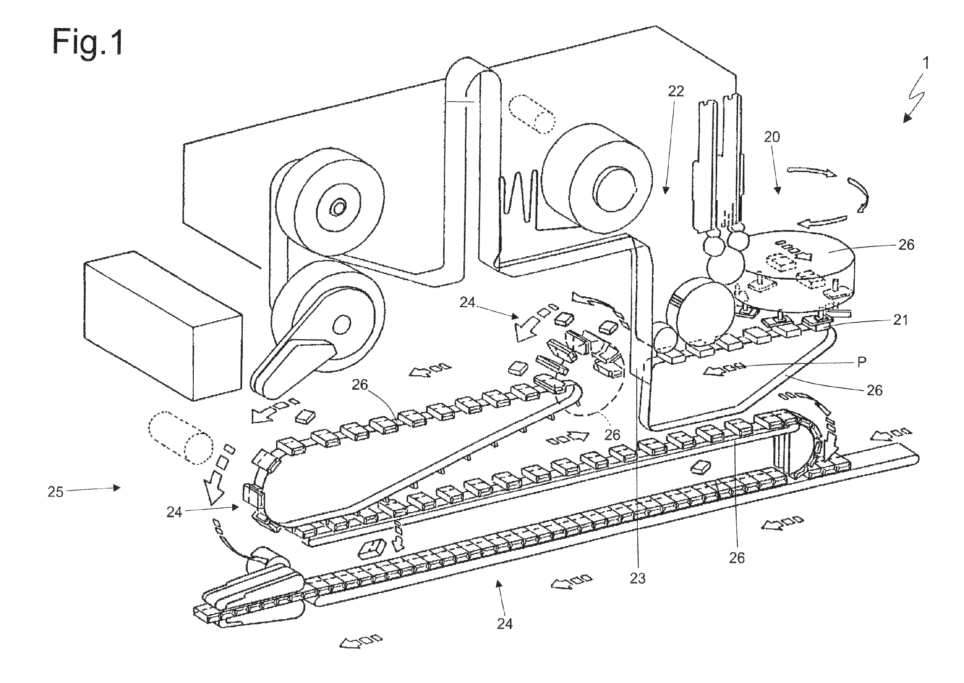

Number 1 in Figure 1 indicates as a whole an automatic machine for wrapping packets of cigarettes in transparent plastic overwrap.

Automatic machine 1 has a processing path P, which originates at a feed station 20 supplying articles 21 for processing (i.e. packets 21 of cigarettes to be wrapped in transparent plastic overwrap). Processing path P extends through a feed station 22, where a sheet 23 of processing (i.e. heat-seal transparent plastic) material is fed and applied to article 21; and through a number of work stations 24, where article 21 is wrapped in sheet 23 of processing material, i.e. sheet 23 of processing material is folded about article 21 and heat sealed. Automatic machine 1 also comprises a conveying device 25 for feeding article 21 along processing path P, from feed station 20 through feed station 22 and work stations 24, and which comprises a number of successive conveyors 26 of different types (typically belts and wheels). A number of actuators, i.e. operating devices with moving parts for performing operations on article 21 and/or sheet 23 of processing material, are installed along conveying device 25, and may either be connected mechanically to (i.e. driven directly by) or driven independently of conveyors 26 of conveying device 25.

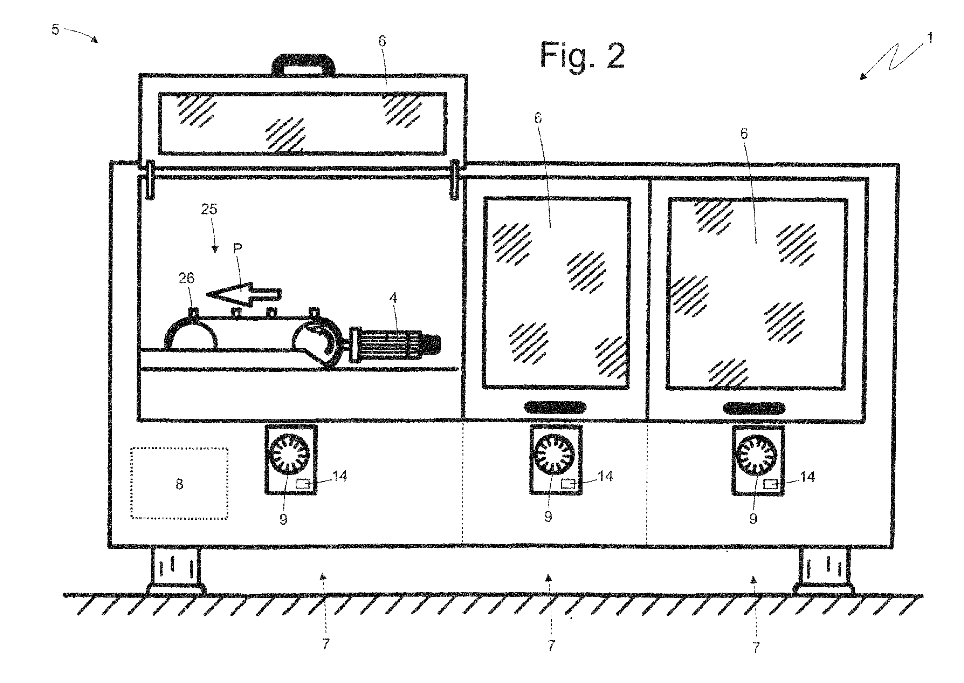

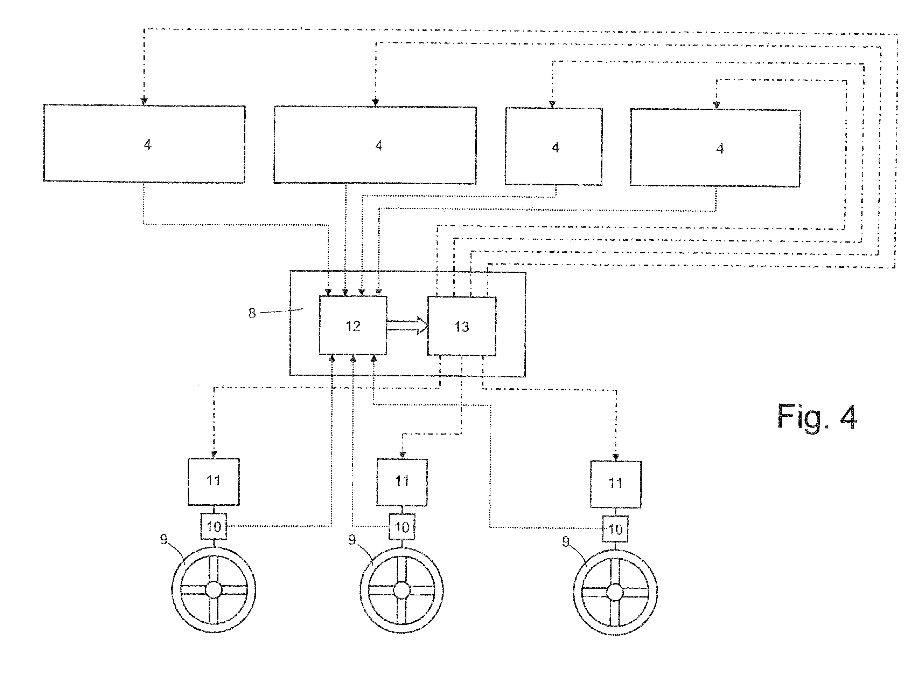

As shown in Figures 2, 3 and 4, conveyors 26 of conveying device 25 are driven by four electric machine motors 4 (shown together in Figure 4). Each electric machine motor 4 may drive one or a number of conveyors 26 together with the relative actuators (operating devices), may be a rotary or linear electric motor, and is normally feedback-controlled and therefore connected mechanically to a position sensor for directly or indirectly determining the current position of electric motor 4.

Processing path P, which is equipped with numerous moving parts, is fitted along its whole length with safety guards 5 to prevent workers from accidentally coming into contact with the moving parts. For obvious safety reasons, electric machine motors 4 are only powered to operate the system when safety guards 5 are closed, i.e. preventing access to processing path P from the outside. Safety guards 5 comprise three hinged doors 6 movable between a closed position 'sealing off' processing path P, and an open position allowing free access to processing path P.

In a preferred embodiment, automatic machine 1 is modular, and comprises three independent connected modules 7, each comprising at least one or even two or more electric machine motors 4.

Automatic machine 1 comprises an electric drive control unit 8 which, among other things, controls electric machine motors 4; and three manual controls 9 operated manually when automatic machine 1 is shut down (i.e. for maintenance or repair), and which, in the Figure 2 embodiment, are each associated with a respective module 7 of machine 1. In the preferred embodiment shown in the drawings, manual controls 9 are defined by handwheels fitted for rotation to a front wall of machine 1. In a different embodiment not shown, manual controls 9 may be defined by knobs fitted for rotation to a control panel of machine 1.

Each manual control 9 is fitted to rotate idly, i.e. is in no way connected mechanically to electric machine motors 4, and, as shown in Figure 4, is associated with an angular position sensor 10 (typically an encoder) for determining the angular position of manual control 9.

When machine 1 is shut down for maintenance or repair, i.e. when one or more doors 6 are open to carry out maintenance or repair work, one of manual controls 9 can be operated to control at least one electric machine motor 4, by means of control unit 8, as a function of the position of manual control 9. In other words, using manual control 9, the operator can control at least one electric machine motor 4, by control unit 8 controlling electric machine motor 4 according to the position of manual control 9.

As shown in Figure 4, each manual control 9 is connected mechanically to an electric feedback motor 11 controlled by control unit 8 to send a force response back to the operator working manual control 9. More specifically, control unit 8 determines the drive torque generated by the electric machine motor 4 being controlled by manual control 9, and controls electric feedback motor 11, connected mechanically to manual control 9, to generate a resisting torque, which opposes movement of manual control 9 and depends on the drive torque generated by electric machine motor 4. The operator working on manual control 9 thus 'feels' the strain being placed on the corresponding electric machine motor 4, i.e. the greater the drive torque generated by the corresponding electric machine motor 4, the greater the resisting torque opposing movement of manual control 9. In other words, when manual control 9 is easy to turn, this tells the operator the corresponding electric machine motor 4 is undergoing no abnormal strain; and conversely, when manual control 9 is hard to turn, this tells the operator that abnormal strain is being put on the corresponding electric machine motor 4.

As stated, control unit 8 controls electric machine motor 4 according to the position of manual control 9. In a preferred embodiment, control unit 8 determines a position error (i.e. difference) between the position of manual control 9 and the position of electric machine motor 4, and determines the drive torque produced by electric machine more 4 accordingly (e.g. using an experimentally determined equation relating the two quantities). In an alternative embodiment, control unit 8 determines the intensity of the electric current drawn by electric machine motor 4, and determines the drive torque produced by electric machine motor 4 accordingly (e.g. using an experimentally determined equation relating the two quantities). More generally speaking, the drive torque produced by each electric motor 4 may be supplied directly by the controller feedback-controlling the position of electric motor 4.

The operator is preferably given the choice between a 'local' and 'global' operating mode, which differ as to the number of electric machine motors 4 operated. In 'local' operating mode, control unit 8 only controls, according to the position of manual control 9, the electric machine motor/s 4 of one module 7 of machine 1 (obviously the module 7 of which the manual control 9 being worked by the operator forms part). In other words, in 'local' operating mode, the operator using manual control 9 only controls a small number of electric machine motors 4, typically forming part of one module 7 of machine 1. In 'global' operating mode, control unit 8 controls, according to the position of manual control 9, all the electric machine motors 4 of machine 1, or at any rate a relatively large number of electric machine motors 4 forming part of at least two modules 7 of machine 1.

When controlling at least two electric machine motors 4 according to the position of manual control 9, control unit 8 determines the drive torque produced by each electric machine motor 4, and determines the resisting torque applied to manual control 9 accordingly. For example, control unit 8 determines the resisting torque applied to manual control 9 on the basis of the highest of all the drive torques produced by electric machine motors 4, or on the basis of a linear combination (i.e. mean value, possibly weighted) of all the drive torques produced by electric machine motors 4.

Obviously, the operator can only work on one manual control 9 at a time. In one possible embodiment, control unit 8 reads the position of one (i.e. 'active') manual control 9 worked on by the operator, and controls the electric feedback motors 11 of the other two (i.e. 'passive') manual controls 9, so the two 'passive' manual controls 9 match the position of the 'active' manual control 9, and, to an outside observer, automatic machine 1 as a whole 'behaves' in the same way. Obviously, at any time, the operator can choose which of manual controls 9 to use as the 'active' one (i.e. manual controls 9 may be connected/disconnected at will to/from control unit 8 to control electric machine motors 4).

Generally speaking, the whole machine must be drivable moving even only one of the powered mechanical parts directly. For example, an automatic cigarette packing machine typically comprises numerous sections or operating assemblies equipped with respective manual controls 9, which, in accordance with the present invention, are capable of moving the whole machine with respective specific strain ratios.

Situations may occur, in which some or all of manual controls 9 are connected mechanically to one of the machine sections, and so also feel the strain from other parts of the machine. Whichever the case, one or more motors 4 or manual controls 9 are connectable/disconnectable to/from the system.

As shown in Figure 4, control unit 8 comprises a read block 12, which reads the data of all the electric motors 4 and position sensors 10 of all the manual controls 9, and, by processing together this data, supplies a control block 13 with a common, unequivocal reference position to match. In other words, read block 12 implements a mathematical function, which, given the positions and drive torques of electric machine motors 4 and the positions of manual controls 9, processes a virtual 'master' signal (i.e. the common, unequivocal reference position to match), which is transmitted to control block 13 to be matched by all the 'slave' electric machine motors 4 and electric feedback motors 11. In other words, all the feedback motors 11 and electric machine motors 4 may be 'slaves' to a 'virtual master' controlled by a mathematic function of the drive torques generated by electric machine motors 4 and/or of position errors, thus achieving a radially symmetrical architecture that is much easier and more flexible to implement.

In one possible embodiment, control unit 8 (independently or requested by the operator) may determine a first predetermined position of electric machine motor 4 (e.g. corresponding to a particular position of the corresponding conveyor), assign manual control 9 a second predetermined position corresponding to the first predetermined position of electric machine motor 4, and, in use, adjust the resisting torque on manual control 9 around the second predetermined position, so this can be 'felt' by the operator on manual control 9. In other words, by appropriately controlling electric feedback motor 11, the operator on manual control 9 can 'feel' when the second predetermined position (or a number of second predetermined positions) is reached. For example, a sort of 'virtual notch', on which manual control 9 tends to stop, can be formed, thus enabling the operator on manual control 9 to instinctively hit the second predetermined position, corresponding to the first predetermined position of electric machine motor 4, quickly and easily on the first try. Obviously, a number of successive first predetermined positions (e.g. in tens of machine degrees) may be determined. For example, in the second predetermined position, the resisting torque generated by electric feedback motor 11 may have a relative minimum, a relative maximum, or a possibly locally inverted inflection.

In one possible embodiment, each manual control 9 is assigned a scale adjuster 14 allowing the operator to adjust (continuously or in steps) the transmission ratio between adjustment to the manual control 9 position and the corresponding adjustment to the position of electric machine motor 4. In other words, using scale adjuster 14, the operator can set each one-degree adjustment to the angular position of manual control 9 to correspond, for example, to a one- or ten-degree or one-tenth-of-a-degree adjustment to the angular position of electric machine motor 4 or the corresponding conveyor.

In a preferred embodiment, control unit 8 comprises a number of software safeties (i.e. safety logic circuits) designed, firstly, to ensure the safety of the operators and, secondly, to ensure the integrity of automatic machine 1. For example, one software safety may prevent electric machine motors 4 from straining against 'moving obstacles'. Another may prevent electric machine motors 4 from speeding, possibly asymmetrically (i.e. at different speeds in different operating directions). This speed restriction serves to prevent the operator being struck by fast-moving parts, or by packing material or ill-fitted parts spun off machine 1. Another software safety may only allow certain movements in one direction and/or up to a given limit point (possibly software-set by the operator). And another may prevent electric machine motors 4 from running moving parts along 'hazardous' trajectories (i.e. resulting in destructive mechanical interference).

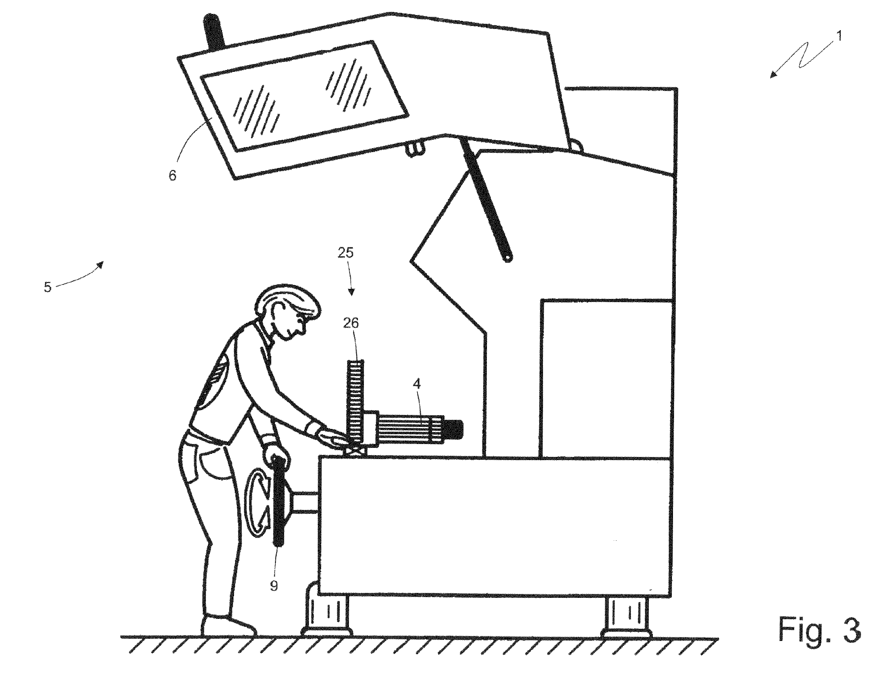

In one possible embodiment, automatic machine 1 has an optical barrier generated by optical emitters/receivers and parallel to the front of machine 1 to 'cordon off' all the moving parts. Only when the optical barrier is unbroken, i.e. is not breached by a foreign body, can control unit 8 actually start electric machine motors 4. In other words, the operator cannot start electric machine motors 4 using manual control 9, if one hand is inside the moving-part area (as shown in Figure 3). The optical barrier is obviously only one of many possible safety devices, and may be replaced or combined with a weight-sensitive platform, on the floor in front of machine 1, designed to detect the presence of an operator close enough to reach the moving parts. Finally, each electric machine motor 4 is connectable mechanically to a crank, which is inserted and turned by hand to operate electric machine motor 4 (and therefore all the moving parts connected mechanically to it) when machine 1 has no electric power (normally only when machine 1 is under construction and therefore without many of its component parts).

In the Figure 1-3 embodiment, automatic machine 1 wraps packets of cigarettes in transparent plastic overwrap.

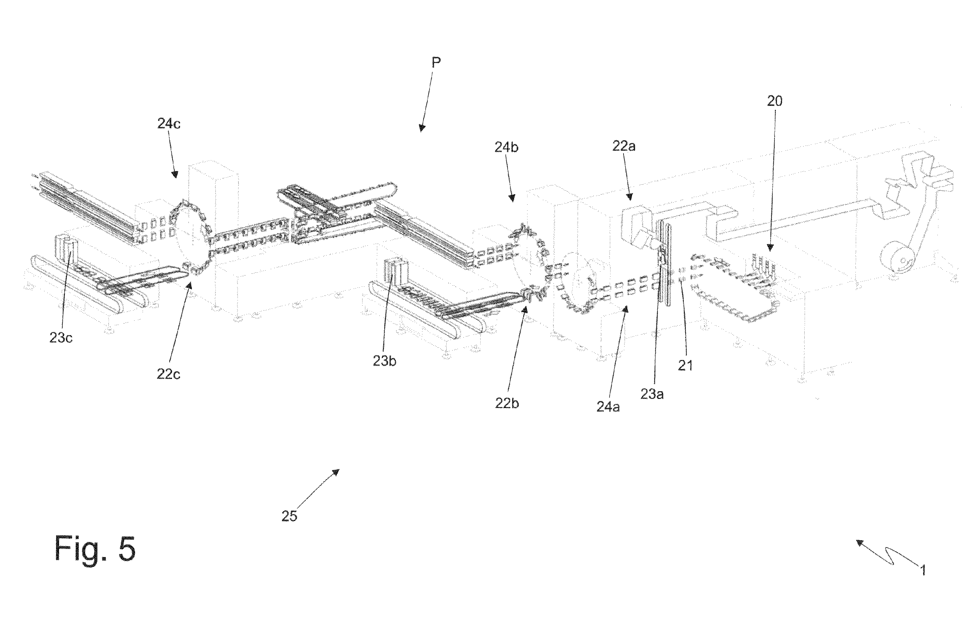

In a different embodiment shown in Figure 5, automatic machine 1 produces rigid packets of cigarettes, and has a processing path P originating at a feed station 20 supplying an article 21 for processing (i.e. cigarettes to be divided into groups for packing). Processing path P extends through a feed station 22a, where a sheet 23a of processing material (foil) is fed and applied to article 21; through a work station 24a, where sheet 23a of processing material is folded about article 21; through a feed station 22b, where a sheet 23b of processing material (an inner blank) is applied to article 21; through a work station 24b, where sheet 23b of processing material is folded about article 21 (on top of the folded sheet 23a of processing material); through a feed station 22c, where a sheet 23c of processing material (an outer blank) is fed and applied to article 21; and through a work station 24c, where sheet 23c of processing material is folded about article 21 (on top of the folded sheet 23b of processing material).

As shown clearly in Figure 5, automatic machine 1 for producing rigid packets of cigarettes zigzags along a considerable length, and so benefits in particular from a number of manual controls 9 distributed along its whole length to allow the operator, manually controlling conveyors 26 using a manual control 9, to observe each part of machine 1 at close range.

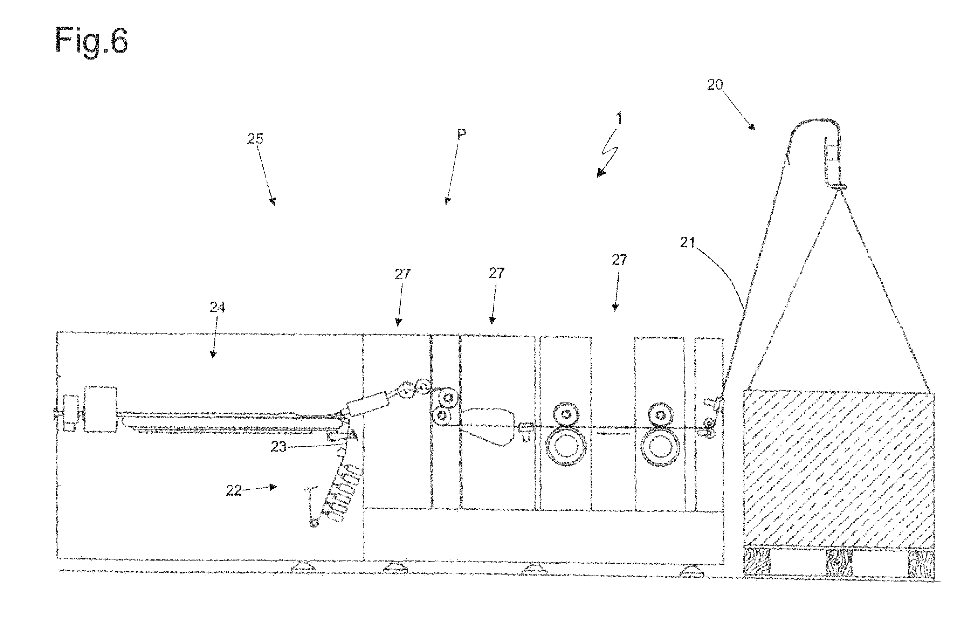

In another embodiment shown in Figure 6, automatic machine 1 produces cigarette filters, and has a processing path P originating at a feed station 20 supplying an article 21 for processing (i.e. a tow of filtering material). Processing path P extends through a number of work stations 27 where the article 21 for processing (i.e. the tow of filtering material) undergoes various operations; through a feed station 22 where a sheet 23 of processing material (a paper strip) is applied to article 21; and through a work station 24 where sheet 23 of processing material is folded (into a tube) about article 21.

In other embodiments not shown, automatic machine 1 produces cigarettes, applies filters to cigarettes, or produces cartons of cigarettes.

The control method descried has numerous advantages, by only requiring the addition of a few compact, low-cost electric feedback motors 11 to existing known automatic machine 1, and so being cheap and easy to implement.

Moreover, the resisting torque generated on manual control 9 by the corresponding electric feedback motor 11 enables the operator working on manual control 9 to 'feel' the strain, and so immediately determine any abnormal strain, on the corresponding electric machine motor 4.

## Claims

1. A method of controlling the electric drive of an automatic manufacturing machine comprising :
at least one first feed station (20) supplying at least one article (21) for processing;
at least one second feed station (22) supplying at least one sheet (23) of processing material, which is applied to the article (21);
at least one work station (24) where the sheet (23) of processing material is folded about the article (21);
a conveying device (25), which feeds the article (21) for processing along a processing path (P) originating at the first feed station (20) and extending through the second feed station (22) and the work station (24);
at least one electric machine motor (4), which drives at least part of the conveying device (25) to move the conveying device (25); and
at least one first manual control (9) operated manually by an operator;
the method comprising the steps of:
determining the position of a first manual control (9) operated by an operator; and
controlling the electric machine motor (4) as a function of the position of the first manual control (9);
the method being **characterized by** comprising the further steps of:
determining a drive torque generated by the electric machine motor (4); and
applying to the first manual control (9) a resisting torque which opposes movement of the first manual control (9) and is a function of the drive torque generated by the electric machine motor (4).

2. A method as claimed in Claim 1, and comprising the further step of controlling an electric feedback motor (11), connected mechanically to the first manual control (9), to generate the resisting torque opposing movement of the first manual control (9).

3. A method as claimed in Claim 1 or 2, and comprising the further step of controlling the electric machine motor (4) according to the position of the first manual control (9).

4. A method as claimed in Claim 3, and comprising the further steps of:
determining a position error between the position of the first manual control (9) and a position of the electric machine motor (4); and
determining the drive torque, generated by the electric machine motor (4), as a function of the position error.

5. A method as claimed in Claim 1, 2 or 3, and comprising the further steps of:
determining the intensity of the electric current drawn by the electric machine motor (4); and
determining the drive torque, generated by the electric machine motor (4), as a function of the intensity of the electric current drawn by the electric machine motor (4).

6. A method as claimed in any one of Claims 1 to 5, and comprising the further step of controlling at least two electric machine motors (4) of the automatic machine (1), which drive at least two corresponding conveyors (26) of the conveying device (25), as a function of the position of the first manual control (9).

7. A method as claimed in Claim 6, and comprising the further steps of:
determining the drive torque generated by each electric machine motor (4); and
determining the resisting torque, applied to the first manual control (9), as a function of the drive torque generated by each electric machine motor (4).

8. A method as claimed in Claim 7, and comprising the further step of determining the resisting toque, applied to the first manual control (9), as a function of the highest of all the drive torques generated by the electric machine motors (4) and/or as a function of a linear combination of all the drive torques generated by the electric machine motors (4).

9. A method as claimed in Claim 7 or 8, wherein the automatic machine (1) is modular, and comprises at least two independent connected modules (7), each comprising at least one electric machine motor (4).

10. A method as claimed in any one of Claims 1 to 9, and comprising the further step of controlling at least a second manual control (9) as a function of the position of the first manual control (9).

11. A method as claimed in any one of Claims 1 to 10, and comprising the further steps of:
determining at least a first predetermined position for an electric machine motor (4);
assigning the first manual control (9) a second predetermined position corresponding to the first predetermined position of the electric machine motor (4); and
adjusting the resisting torque, applied to the first manual control (9), about the second predetermined position.

12. A method as claimed in any one of Claims 1 to 10, and comprising the further step of adjusting a transmission ratio, between a variation in the position of the first manual control (9) and a corresponding variation in the position of the electric machine motor (4), by means of a scale adjuster (14) associated with the first manual control (9).

13. An automatic manufacturing machine comprising:
at least one first feed station (20) supplying at least one article (21) for processing;
at least one second feed station (22) supplying at least one sheet (23) of processing material, which is applied to the article (21);
at least one work station (24) where the sheet (23) of processing material is folded about the article (21);
a conveying device (25), which feeds the article (21) for processing along a processing path (P) originating at the first feed station (20) and extending through the second feed station (22) and the work station (24);
at least one electric machine motor (4), which drives at least part of the conveying device (25) to move the conveying device (25);
at least one manual control (9) operated manually by an operator;
a position sensor (10), which determines the position of the manual control (9); and
a control unit (8), which controls the electric machine motor (4) as a function of the position of the manual control (9);
the automatic machine (1) being **characterized by** comprising an electric feedback motor (11) connected mechanically to the manual control (9), and which is controlled by the control unit (8) to generate a resisting torque which opposes movement of the manual control (9) and is a function of the drive torque generated by the electric machine motor (4).
